# FASCICULE DE BREVET EUROPEEN

(11) **EP 3 014 502 B1**
(45) Date de publication et mention de la délivrance du brevet: **19.02.2020**
(21) Numéro de dépôt: 14738571.0
(22) Date de dépôt: 23.06.2014
(51) Int. Cl.: H04L 29/08

(54) **ARCHITECTURE RÉSEAU COOPÉRATIVE**
KOOPERATIVE NETZWERKARCHITEKTUR
COOPERATIVE NETWORK ARCHITECTURE

(30) Priorité: 25.06.2013 FR 1356041
(43) Date de publication de la demande: 04.05.2016
(73) Titulaire: Orange, 75015 Paris (FR)
(72) Inventeur: FIEAU, Frédéric, F-75013 Paris (FR); FROMENTOUX, Gaël, F-22560 Pleumeur Bodou (FR); BIHANNIC, Nicolas, F-22560 Trebeurden (FR)
(74) Mandataire: Plasseraud IP
(86) Numéro de dépôt international: PCT/FR2014/051559
(87) Numéro de publication internationale: WO 2014/207359

(56) Documents cités:
- US-A1- 2011 295 942
- "3rd Generation Partnership Project; Technical Specification Group Services and System Aspects; Policy and charging control architecture (Release 12)", 3GPP DRAFT; 23203-C00_FROM_B90_CRS_IMPLEMENTED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 12 février 2013 (2013-02-12), XP050707917, Extrait de l'Internet: URL:http://www.3gpp.org/ftp/tsg_sa/WG2_Arc h/Latest_SA2_Specs/DRAFT_INTERIM/Archive/ [extrait le 2013-02-12] cité dans la demande
- "3rd Generation Partnership Project; Technical Specification Group Core Network and Terminals; Policy and Charging Control over Rx reference point (Release 12)", 3GPP DRAFT; 29214-C00_RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 24 juin 2013 (2013-06-24), XP050694654, Extrait de l'Internet: URL:http://www.3gpp.org/ftp/tsg_ct/WG3_int erworking_ex-CN3/Draft_Specs_after_CP60/ [extrait le 2013-06-24] cité dans la demande

## Description

La présente invention concerne la transmission d'informations dans un réseau de télécommunications, en particulier dans un réseau mobile.

Elle concerne plus précisément la coopération entre fournisseurs de service dans le réseau et l'opérateur en charge du réseau.

Le nombre et le volume de contenus numériques accessibles sur les réseaux de télécommunication mobiles de type IP (pour « *Internet Protocol* » en anglais) tendent à augmenter exponentiellement. Afin de répondre à cette augmentation, les opérateurs de réseau déploient des architectures hiérarchiques et organisées telles que des CDNs (pour « *Content Delivery Networks »* en anglais) et des fonctions supplémentaires telles que PCC (pour « *Policy and Charging Control »* en anglais), qui est décrit dans le standard du 3GPP, « Technical Specification Group Core Network and Terminals ; Policy and Charging Control over Rx reference point », TS 29-214, version 11.8.0 du 15 mars 2013.

De telles architectures hiérarchisées permettent de valoriser le réseau mobile avec des services associés tels que le « Turbo bouton » ou « Data booster ». Ces deux services permettent, dans le cas de clients différenciés par qualité de service, notamment entre une qualité élevée, dite « premium », et une qualité plus réduite, dite «non premium », d'offrir à un client «non premium », une qualité de service de type « premium » pour un service donné, durant un laps de temps donné. Un service est activé sur demande explicite du client ou lors d'une demande de service qui nécessite une qualité de service réseau de type « premium ».

Dans une architecture de type OTT (pour « Over The Top » en anglais), un client est à la fois client d'un fournisseur de service OTT et de l'opérateur du réseau mobile.

Dans le cas où un broker CDN est inséré entre le fournisseur de service et l'opérateur réseau, le broker CDN est capable de sélectionner un couple ressource de livraison (CDN ou serveur)/réseau, en fonction de critères basés sur la qualité d'expérience des utilisateurs.

Dans ce cas, le CDN broker peut exclure un couple CDN/réseau lorsque la plupart des terminaux utilisateurs de clients livrés par ce réseau remontent des mesures de qualité défavorables à ce couple CDN/réseau (cas de congestion du réseau par exemple). Le classement du couple CDN/réseau est ainsi dégradé par le CDN broker, et éventuellement jusqu'à un niveau où il n'est plus sélectionnable pour servir les clients mobiles d'un service de livraison en mode OTT.

Il conviendrait pour un fournisseur de service tiers de pouvoir différencier la qualité de service qu'il fournit entre différentes catégories de clients du réseau.

Les opérateurs réseau ne disposent d'aucun moyen de favoriser une catégorie de clients lorsque ces derniers utilisent un service de type OTT. En effet, pour un service fourni par un fournisseur de service tiers, et dont la qualité de service est gérée uniquement par ce fournisseur de service tiers, l'opérateur réseau ne peut garantir à ses clients de type « premium » qu'ils ne subiront pas une dégradation de la qualité de service, que ces clients soient des clients disposant d'un abonnement « premium » ou qu'ils aient activé un service de type « Turbo bouton » ou « Data Booster » pendant une durée donnée. Ainsi, la catégorisation de clients mobiles voulue par l'opérateur de réseau n'a pas d'effet sur des services de type OTT.

Il existe ainsi un besoin de renforcer la coopération entre opérateurs de réseaux et fournisseurs de service, en vue de permettre une catégorisation efficace d'utilisateurs.

La présente invention vient améliorer la situation.

Elle propose à cet effet un procédé de transmission d'informations relatives à un réseau de communication, selon la revendication 1, un programme d'ordinateur selon la revendication 7 et un système selon la revendication 8. Les revendications dépendantes présentent des modes de réalisation préférés de l'invention.

Comme détaillé dans ce qui suit, le premier serveur et le second serveur peuvent communiquer par l'intermédiaire de l'interface Rx définie dans le standard 3GPP « Technical Specification Group Core Network and Terminais ; Policy and Charging Control over Rx reference point », TS 29-214, version 11.8.0 du 15 mars 2013. Le premier serveur peut alors intégrer les fonctionnalités du PCRF défini dans le standard précité, tandis que le second serveur correspond à l'AF (Application Function qui est le terme générique du 3GPP pour désigner les plateformes de service). Un exemple d'identifiant de sous-réseau peut par exemple être un PID défini dans la norme ALTO (voir par exemple le document US 2011/0295983).

Ainsi, le procédé selon l'invention permet de renforcer la coopération entre opérateur mobile et fournisseur de service, le fournisseur de service pouvant être un fournisseur de service tiers, un fournisseur de contenus ou encore un broker CDN, tel qu'évoqué précédemment. Le procédé selon l'invention permet en effet de fournir des informations au fournisseur de service qui assurent la permanence de la catégorisation des utilisateurs que l'opérateur réseau a mis en place, sans pour autant modifier l'indépendance de la gestion des ressources réseaux et des politiques mises en place par les fournisseurs de service. De manière réciproque, le renforcement d'une telle coopération peut permettre au fournisseur de service de demander une priorisation des flux de service au niveau du réseau suivant une catégorisation des utilisateurs gérée par le fournisseur de service.

Selon l'invention, la table de données met un identifiant utilisateur en correspondance avec l'adresse réseau d'un terminal utilisateur et avec l'identifiant du sous-réseau correspondant.

Ceci permet de différencier différentes sessions pour un même utilisateur, chaque session étant identifiée par une adresse réseau.

Selon l'invention, le procédé comprend :
- sur réception depuis un premier terminal utilisateur identifié auprès du premier serveur par un premier identifiant utilisateur, d'une requête de changement de qualité de service d'une première qualité de service vers une seconde qualité de service, mise à jour de la table de données en mettant en correspondance chaque adresse réseau correspondant audit premier identifiant utilisateur dans la table de données, avec l'identifiant de sous-réseau associé à la deuxième qualité de service; et
- transmission d'au moins une partie de la table de données mise à jour au second serveur.

Ceci permet l'utilisation d'une table de données dynamique qui, bien que nécessitant des échanges fréquents entre l'opérateur réseau et le fournisseur de service, améliore la flexibilité du procédé. En effet, une table de données dynamique permet de déplacer les adresses réseau de sessions en cours, vers un identifiant de sous-réseau associé à une deuxième qualité de service. Ainsi, lorsqu'un utilisateur active un service de type turbo bouton, l'ensemble de ses sessions en cours peuvent être traitées par l'opérateur réseau et le fournisseur de service selon une qualité de service de type premium.

En complément, la partie de la table de données peut être transmise selon une fréquence prédéterminée au second serveur, et la partie de la table de données mise à jour peut être transmise en fonction de la fréquence prédéterminée.

Un tel mode de réalisation permet de limiter les échanges entre l'opérateur réseau et le fournisseur de service, tout en mettant régulièrement à jour une table de données dynamique.

Selon un mode de réalisation de l'invention, le procédé comprend une étape préalable de transmission au second serveur d'une correspondance entre chaque identifiant de sous-réseau et chaque qualité de service correspondante, en vue de la fourniture d'un service à un terminal utilisateur selon une qualité de service correspondant au sous-réseau mis en correspondance avec l'adresse réseau du terminal utilisateur dans la table de données.

Ainsi, une coopération renforcée est permise entre l'opérateur réseau et le fournisseur de service, ce qui leur permet de mettre en œuvre une politique de qualité de service commune pour les différents sous-réseaux.

Selon une réalisation de l'invention, chaque adresse réseau peut comprendre une adresse IP et un numéro de port.

En différenciant les adresses réseau par numéros de port, le procédé permet de différencier les utilisateurs dans le cas d'un réseau d'utilisateurs utilisant un adressage de type NAT par exemple.

Selon un mode de réalisation, une politique de qualité de service différenciée par adresse réseau est mise en œuvre dans le réseau de communication et le procédé comprend en outre les étapes suivantes :
- réception depuis le second serveur d'un ensemble de métriques, chaque métrique de l'ensemble de métriques étant représentative d'une qualité d'expérience dans un sous-réseau du réseau de communication ;
- mise à jour, en fonction de l'ensemble de métriques reçues, d'une politique de qualité de service par adresse réseau différenciée en fonction d'une appartenance de chaque adresse réseau à un sous-réseau du réseau de communication, ladite appartenance étant déterminée à partir de la table de données.

Ce mode de réalisation permet l'enrichissement de la norme « MOSAP » en permettant au fournisseur de service de fournir des ensembles de métriques sur les qualités d'expérience perçues par les différents sous-réseaux. A partir de cet ensemble de métriques, l'opérateur réseau peut prioriser certains flux, mettre à jour la table de données et notifier le fournisseur de service d'une mise à jour de table de données, notifier le fournisseur de service de la priorisation de certains flux, et notifier le fournisseur de service sur la priorisation de niveau applicative qui peut être mise en œuvre par le fournisseur de service afin d'assurer une cohérence des actions de niveau réseau et de niveau applicatif pour les différents sous-réseaux.

D'autres caractéristiques et avantages de l'invention apparaîtront à l'examen de la description détaillée ci-après, et des dessins annexés sur lesquels:
- la figure 1 illustre une architecture générale d'un système de coopération entre un fournisseur de service et un opérateur réseau, selon un mode de réalisation de l'invention ;
- la figure 2 est un diagramme illustrant les étapes d'un procédé selon un mode de réalisation général de l'invention ;
- les figures 3 à 6 sont des diagrammes illustrant entre entités du système de la figure 1, selon quatre modes de réalisation de l'invention ;
- la figure 7 illustre un serveur d'un opérateur de réseau selon un mode de réalisation de l'invention ; et
- la figure 8 illustre un serveur d'un fournisseur de service selon un mode de réalisation de l'invention.

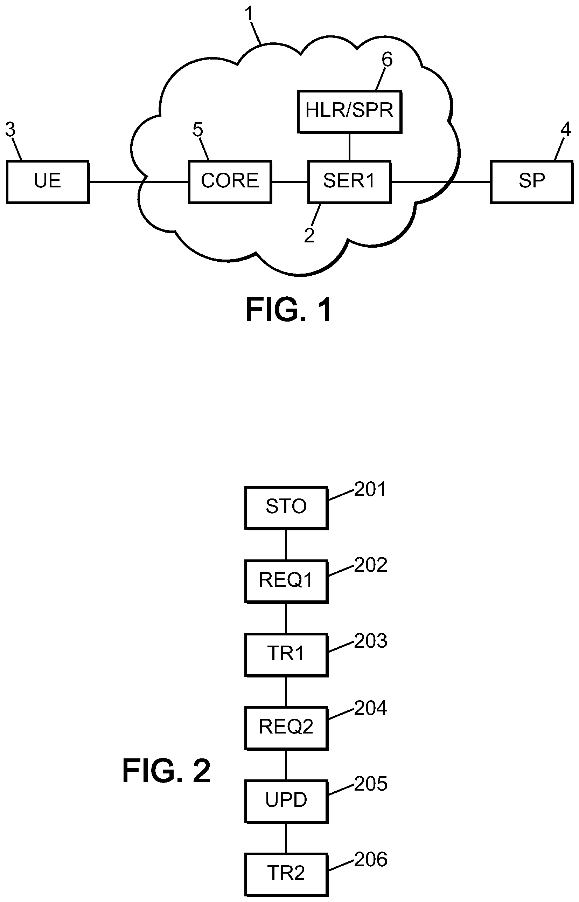

La **figure 1** illustre un système de coopération entre un fournisseur de service et un opérateur de réseau selon un mode de réalisation de l'invention.

Un premier serveur 2 d'opérateur de réseau en charge de la gestion des ressources réseaux d'un réseau de communication 1 est apte à communiquer avec un second serveur 4 d'un fournisseur de service. Aucune restriction n'est attachée au type de réseau 1 considéré. Dans ce qui suit, la présente invention est détaillée dans le contexte d'un réseau 1 de type IP tel qu'Internet par exemple.

Une interface entre le premier serveur 2 et le second serveur 4 peut par exemple être l'interface Rx définie dans le standard 3GPP « Technical Specification Group Core Network and Terminals ; Policy and Charging Control over Rx reference point », TS 29-214, version 11.8.0 du 15 mars 2013. Le premier serveur 2 intègre alors les fonctionnalités du PCRF défini dans le standard précité, tandis que le second serveur correspond à l'AF.

Le premier serveur 2 est en outre relié au réseau cœur 5 et à une base de données de profils d'utilisateurs 6, de type « User Profile Repository », HLR (pour « Home Location Register », HSS (pour « Home Subscriber Server ») ou SPR (pour « Subscription Profile Repository » de l'entité PCC).

Un terminal utilisateur 3 peut par ailleurs requérir les services du second serveur 4 par l'intermédiaire du réseau 1.

La présente invention propose d'intégrer des principes de la norme ALTO (pour « Application Layer Traffic Optimization » en anglais), telle que définie dans le document US 2011/0295983, et propose en particulier l'utilisation de cartes réseau (« Network Maps »), ou tables de PID (aussi appelées plus généralement « table de données » par la suite), qui partitionnent virtuellement le réseau 1 de l'opérateur de réseau en un ensemble de sous-réseaux virtuels identifiés chacun par un identifiant de sous-réseau de type PID. Selon l'invention, un sous-réseau virtuel peut être associé à une qualité de service donnée et regroupe ainsi des utilisateurs disposant d'une telle qualité de service aux yeux de l'opérateur réseau. Par exemple, un sous-réseau peut regrouper l'ensemble des utilisateurs de type « premium » tandis qu'un autre sous-réseau peut regrouper l'ensemble des utilisateurs de type « non premium ».

La présente invention propose de partager de telles tables de PID entre l'opérateur réseau et le fournisseur de service, ce qui permet d'améliorer la qualité d'expérience des utilisateurs en fonction du sous-réseau auquel ils appartiennent. En effet, selon les techniques actuelles, un utilisateur peut être de type « premium » pour l'opérateur réseau mais pas pour le fournisseur de service. A l'inverse, un autre utilisateur peut être de type « premium » pour le fournisseur de service mais pas pour l'opérateur réseau.

Selon l'invention, en fonction du contexte, la table de PID peut être construite soit à partir d'informations provenant uniquement de l'opérateur réseau (abonnement « premium » d'un utilisateur, activation temporaire d'un « turbo bouton »), soit en considérant des informations provenant du fournisseur de service (par exemple pour un service de type « sponsored data connectivity » tel que défini dans le standard 3GPP, « Sponsored Data Connectivity - Stage 2 Architecture » TS23.203-c00, 5 mars 2013).

L'invention peut également prévoir l'utilisation de table de coûts (« Cost Maps »), définies dans la norme ALTO et permettant d'associer un coût réseau à chaque PID de la table de PID. Les tables de coûts peuvent être définies par l'opérateur de réseau en fonction de son expérience, de ses besoins et du contexte. Dans l'exemple de service « sponsored data connectivity », une table de coûts pourra être utilisée par l'opérateur de réseau pour indiquer un niveau de reversement attendu pour la mise en œuvre de la qualité de service requise par le fournisseur de services pour les différents réseaux virtuels constituant la table de PID.

A titre d'exemple, les coûts associés à certains PID dans la table de coûts pourront être augmentés dans un contexte de congestion des sous-réseaux associés à ces PID.

Ainsi, l'invention permet à l'opérateur de réseau d'informer les fournisseurs de service sur ses sous-réseaux virtuels et non plus sur son réseau mobile propre (par exemple des informations de topologie), ce qui permet de garantir la confidentialité des informations de son réseau.

Dans un mode de réalisation de l'invention, en cas d'une faible coopération entre le fournisseur de service et l'opérateur de réseau, la confidentialité des clients de l'opérateur de réseau peut être assurée en ne fournissant ni l'identité, ni le profil des utilisateurs (premium, non premium), et ainsi, le fournisseur de service ne connaît pas l'identité des utilisateurs rattachés à chacun des PID de la table de PID.

A noter que le réseau 1 peut être dimensionné de façon optimale en fonction du nombre d'utilisateurs premium qu'il peut autoriser, de façon à garantir une qualité d'expérience pour ces utilisateurs. Un tel dimensionnement peut être effectué au préalable par l'opérateur de réseau et peut être revu si nécessaire.

Ainsi, en fonction d'un niveau de coopération entre le fournisseur de service et l'opérateur de réseau, au moins une partie de la table de PID précitée est transmise de l'opérateur de réseau au fournisseur de service, sur réception d'une requête du fournisseur de service, la requête requérant des informations liées au réseau 1.

La table de PID est une table de données mettant en correspondance des identifiants (PID) de sous-réseaux du réseau de communication associés à des qualités de service respectives (qualité de service de type premium ou de type non premium par exemple), avec au moins une adresse réseau d'un terminal utilisateur, l'adresse réseau comprenant une adresse IP du terminal utilisateur, voire le port alloué. La table de PID peut en outre comporter une colonne supplémentaire dédiée à des identifiants utilisateur, qui peuvent être par exemple des identifiants MSISDN (numéros de téléphone). Ainsi, un identifiant utilisateur peut être associé à plusieurs adresses réseau, un utilisateur pouvant avoir plusieurs sessions de communication simultanées.

La partie de la table de données transmise à l'opérateur de service dépend du niveau de coopération, mais elle comprend au minimum les correspondances entre chaque identifiant de sous-réseau et les adresses réseau des terminaux d'utilisateurs.

Les adresses réseau peuvent en outre comprendre un numéro de port du terminal utilisateur correspondant à une session de communication, ce qui est particulièrement avantageux dans le cadre de l'utilisation de traductions d'adresse réseau (ou NAT pour « Network Address Translation » en anglais) comme c'est le cas dans des réseaux d'entreprise par exemple.

La présente invention permet ainsi de compléter la définition du PID donnée dans la norme ALTO. En effet, dans la norme ALTO actuelle, un PID n'est identifié que par une plage d'adresses IP réservée par sous-réseau, ce qui ne permet pas de différencier entre eux les utilisateurs de ces sous-réseaux.

En ajoutant une plage de ports (source ou destination), le second serveur 4 du fournisseur de services ou du broker peut identifier de façon plus précise le PID d'une session utilisateur par l'adresse IP et le port source des paquets émis par le terminal utilisateur 3.

Ainsi, il devient possible de différencier des groupes d'utilisateurs au moyen de la table de PID (une plage de ports par groupe d'utilisateurs), en particulier les utilisateurs « premium » des utilisateurs « non premium », sans nécessairement fournir d'informations quant aux caractéristiques du réseau 1 utilisé par ces groupes d'utilisateurs. L'opérateur de réseau peut ainsi conserver une certaine confidentialité vis-à-vis d'un fournisseur de service OTT qui reçoit la table de PID.

L'ajout d'une telle plage de ports est cependant facultatif pour la mise en œuvre de l'invention. En effet, dans des systèmes ne mettant pas en œuvre des règles de NAT, un terminal utilisateur 3 peut être identifié par son adresse IP uniquement. La transmission d'une correspondance entre adresses réseaux comprenant uniquement une adresse IP et des identifiants de sous-réseaux, de type PID, au second serveur 2 du fournisseur de service est suffisante dans un mode de réalisation général de l'invention. Toutefois, dans un contexte où l'utilisateur peut avoir plusieurs sessions de services simultanément, l'identification de chaque session au niveau du réseau est simplifiée avec la prise en compte de l'adresse IP et du port utilisés pour définir l'adresse réseau.

Dans un contexte de faible coopération entre le fournisseur de service et l'opérateur de réseau, le fait de communiquer uniquement une correspondance entre PID et adresses réseau permet à l'opérateur de réseau de ne pas communiquer au fournisseur de service la catégorisation de ses utilisateurs, mais uniquement une table de partition de son réseau identifiant des sous-réseaux virtuels.

Toutefois, comme précédemment décrit, dans un contexte de coopération plus forte, la partie de la table de PID transmise au fournisseur de service peut intégrer un ensemble d'identifiants utilisateur. Par exemple, dans le cadre d'un réseau mobile, un PID pourra en outre correspondre à un ensemble de MSISDN, permettant ainsi au fournisseur de service (fournisseur de contenu ou broker) d'identifier les utilisateurs mobiles qui accèdent à son service avec le PID correspondant. Un MSISDN identifie de façon unique une carte SIM dans un terminal utilisateur. D'autres identifiants utilisateur peuvent être prévus selon l'invention, suivant la préférence du fournisseur de service, comme par exemple l'utilisation d'aliasing ou d'identifiants de type OpenID qui est largement utilisé par les acteurs du web.

Ainsi, dans un contexte de plus forte coopération (comme dans un contexte de type « Sponsored Data Connectivity »), le fournisseur de service peut indiquer à l'opérateur mobile la liste des utilisateurs qui pourront bénéficier de cet accès au service « sponsorisé », afin que ces utilisateurs soient catégorisés dans le sous-réseau correspondant, dans la table de PID de l'opérateur de réseau.

La présente invention présente deux exemples de tables de données.

Selon un premier exemple, la table de données est statique, ce qui signifie que lorsqu'un utilisateur requiert un service de type « turbo bouton », afin d'être catégorisé temporairement en tant qu'utilisateur de type « premium », seules les sessions activées après l'activation du «turbo bouton» bénéficient du statut «premium» de l'utilisateur. Ainsi, après activation du « turbo bouton », et sur création d'une session de communication, le terminal 3 de l'utilisateur se voit attribuer une adresse réseau (adresse IP complétée ou non par un numéro de port, selon le mode de réalisation) qui appartient à la plage d'adresses réseau associé au PID premium.

Dans la table 1 ci-dessous, représentant un exemple d'une table de données statique selon un mode de réalisation de l'invention, un terminal émettant des paquets avec une adresse IP 82.82.80.1 et un port source compris entre 5000 et 6000 sera considéré comme «premium par souscription » et aura donc un PID de 1 attribué par l'opérateur et communiqué, via l'interface Rx précitée par exemple, au fournisseur de service en réponse à la requête introduite précédemment. Par défaut, la table de PID peut être définie par ordre de priorité (par exemple 1 pour le service « premium » et 2 pour le service « non premium »). Ainsi, selon ce premier exemple de table de PID, les utilisateurs non-premium (PID 2) seront identifiés par toutes les adresses IP et ports restants (ayant une adresse réseau autre que 82.82.80.1 : 5000-6000), non renseignés dans la ou les lignes précédentes (dans le cas présent, la ligne précédente dédiée aux utilisateurs premium).

**Table 1 : Table de PID fixe**

| Type d'utilisateur | Faible coopération | | Forte coopération |
|---|---|---|---|
| | PID | Plages d'adresses réseau (IP + port source) | Identifiants utilisateurs |
| Premium (souscription) | 1 | 82.82.80.0/16 : 5000-6000 | 13109976224 |
| | | | 15390018506 |
| | | | 28114598401 |
| Non-Premium | 2 | Toutes les autres adresses IP: tous les ports | n/a |
| | | (ce qui exclut les adresses réseau "premium" : 82.82.80.0/16:5000-6000) | |

Une fois qu'un utilisateur non premium ayant pour adresse réseau initiale 82.82.80.2/3000, active le « turbo bouton », chaque nouvelle session, ouverte consécutivement à l'activation précitée, se verra attribuer, pour adresse réseau, une adresse IP 82.82.80.0 et un numéro de port inclus dans l'intervalle 5000-6000 par l'opérateur réseau, et donc ses nouvelles sessions seront en correspondance avec le PID 1.

De manière similaire, les flux ayant par exemple pour identifiant utilisateur un MSISDN de 13109976224 dans un en-tête http d'une requête aura un PID de 1 et sera considéré comme premium du point de vue de l'opérateur réseau.

En complément, l'opérateur réseau peut construire une table de coûts à partir de la table de PID, en attribuant une pondération de coût par PID, comme illustré dans la Table 2 ci-après.

**Table 2 : premier exemple de table de coûts**

| PID | Coût |
|---|---|
| 1 | 20 |
| 2 | 100 |

La table de coûts est gérée par l'opérateur réseau et peut être dynamique puisqu'elle indique le coût des ressources pour chaque sous-réseau virtuel identifié par un PID. La table de coûts peut refléter l'état de disponibilités des ressources et elle n'est pas obligatoirement transmise au fournisseur de service : en effet, une telle transmission est conditionnées par un degré de coopération suffisant entre l'opérateur réseau et chaque fournisseur de service.

Un tel degré de coopération détermine par ailleurs la partie de la table de PID qui est transmise au fournisseur de service.

Dans un contexte de faible coopération, l'opérateur réseau peut ne pas transmettre, pour des raisons de confidentialité, la correspondance entre l'identifiant PID de sous-réseau et le type d'utilisateur (premium et non premium). Seule la correspondance entre le PID et la plage d'adresses réseau est nécessaire au fournisseur de service ou broker.

Dans un contexte de coopération avancée, les identifiants utilisateur et/ou l'association entre PID et type d'utilisateurs pourront être échangés (instanciation « MOSAP » décrite ci-après).

Selon un second exemple, la table de PID est dynamique et la correspondance entre le type d'utilisateur, le PID, l'adresse réseau et les identifiants utilisateur, est mise à jour de manière régulière ou sur requête. Par exemple, elle peut être mise à jour suite à la réception d'une requête de changement de qualité de service, d'une première qualité de service (non premium par exemple) à une seconde qualité de service (premium par exemple) suite à l'activation d'un turbo bouton. En fonction du degré de coopération entre le fournisseur de service et l'opérateur réseau, l'intégralité ou seule une partie des informations de la table de PID mise à jour est transmise au fournisseur de service. En tout état de cause, les correspondances entre les identifiants PID et les adresses réseau sont transmises.

Une telle table de PID dynamique est donnée ci-dessous en tables 3 (avant mise à jour) et 4 (après mise à jour). Dans la table 3, on différencie les utilisateurs premium par souscription (PID 1), des utilisateurs premium à la demande (PID 2) et des utilisateurs non-premium (PID 3).

Ainsi, si un utilisateur non premium active le turbo bouton pour ses sessions de communication en cours et futures, la présente invention propose de modifier la table de PID de l'opérateur réseau en ajoutant les adresses réseau (adresse IP éventuellement complétée par le numéro de port) dans les correspondances avec le PID 2 des utilisateurs premium à la demande. L'utilisateur en question est alors considéré comme utilisateur premium à la demande et bénéficie des améliorations de qualité de service.

Dans l'exemple illustré en tables 3 et 4, en considérant un utilisateur initialement non-premium ayant une session en cours avec le serveur 4 de fournisseur de service ou s'il fait une demande de service auprès d'un broker, la session étant associée à une adresse réseau 82.82.80.1 :3001, il est initialement identifié comme non premium, et associé avec un PID 3 dans la table 3 avant mise à jour.

Si cet utilisateur active le turbo bouton, l'adresse réseau de sa session en cours est ajoutée en correspondance avec le PID 2 et retirée de la correspondance avec le PID 3 (voir Table 4 après mise à jour). La mise à jour de la table de PID peut alors être faite par l'opérateur de réseau et au moins une partie de la table de PID mise à jour est transmise aux fournisseurs de service, la partie comprenant au moins les associations entre PID et adresses réseau. La transmission de la partie de la table mise à jour peut être effectuée régulièrement, à une fréquence donnée par exemple.

L'invention peut également prévoir que les identifiants utilisateur MSISDN 13109976224, 15399018506 et 28114598401, correspondent à des utilisateurs non premium avant mise à jour (PID 3). Après activation du turbo bouton par les utilisateurs identifiés par les MSISDN 13109976224 et 28114598401, et mise à jour de la table de PID (Table 4), les deux identifiants utilisateur MSISDN 13109976224 et 28114598401 sont placés en correspondance avec l'identifiant de sous-réseau PID 2 et correspondent à des utilisateurs premium à la demande.

A noter que dans l'exemple illustré dans les tables 3 et 4, l'utilisateur identifié par le MSISDN 28114598401 a deux sessions en cours sur deux ports distincts (3001 et 4244) à la même adresse IP (82.82.80.3).

**Table 3 : Table de PID dynamique, avant mise à jour**

| Type d'utilisateur | PID | Adresses réseau | Identifiants utilisateur (MSISDN par exemple) |
|---|---|---|---|
| Premium (par souscription) | 1 | 82.83.80.0/16 : 0-tous | n/a |
| | | 82.82.80.0/16 : 5000-6000 | |
| Premium (à la demande) | 2 | 82.82.80.1 : 4244 | n/a |
| Non-Premium | 3 | Toutes les adresses IPs : tous les numéros de port | n/a |
| | | (ce qui exclut les adresses réseau premium par souscription et à la demande, respectivement.: 82.83.80.0/16 : 0-tous, 82.82.80.0/16 : 5000-6000 et 82.82.80.1 : 4244) | |

**Table 4 : Table de PID dynamique, après mise à jour**

| Type d'utilisateur | PID | Adresses réseau | Identifiants utilisateur (MSISDN par exemple) |
|---|---|---|---|
| Premium (par souscription) | 1 | 82.83.80.0/16 : 0-tous | n/a |
| | | 82.82.80.0/16 : 5000-6000 | |
| Premium (à la demande) | 2 | 82.82.80.1 : 3001 | n/a |
| | | 82.82.80.1 : 4244 | n/a |
| | | 82.82.80.2 :3001 | 15399018506 |
| | | 82.82.80.3 :3001 | 28114598401 |
| | | 82.82.80.3 :4244 | 28114598401 |
| Non-Premium | 3 | Toutes les adresses IPs : tous les numéros de port | n/a |
| | | (ce qui exclut les adresses réseau premium par souscription et à la demande, respectivement: | |
| | | 82.83.80.0/16:0-tous | |
| | | 82.83.80.0/16: 5000-6000 | |
| | | 82.82.80.1 : 3001 | |
| | | 82.82.80.1 : 4244 | |
| | | 82.82.80.2 :3001 | |
| | | 82.82.80.3 :3001 | |
| | | 82.82.80.3 :4244) | |

De manière identique au premier exemple avec table de PID fixe, une table de coûts peut être associée à la table de PID dynamique et une évaluation du coût associé à chaque PID peut être régulièrement effectuée par l'opérateur réseau. Les informations de la table de coûts peuvent être transmises ou non aux fournisseurs de service ou broker selon le degré de coopération avec l'opérateur réseau.

La Table 5 donne un exemple de table de coût associée à une table de PID dynamique.

**Table 5 : deuxième exemple de table de coûts**

| PID | Coût |
|---|---|
| 1 | 20 |
| 2 | 20 |
| 3 | 100 |

A noter que, pour une table de PID fixe ou dynamique, la localisation géographique de l'utilisateur peut également être prise en compte afin de créer un sous-réseau, et donc un identifiant PID peut être associé à un couple localisation/type d'utilisateur.

La **Figure 2** est un diagramme illustrant les étapes d'un procédé selon un mode de réalisation général de l'invention.

A une étape 201, une table de données, telle qu'une table de PID définie précédemment, est stockée dans le premier serveur 2 de l'opérateur réseau. La table de données met en correspondance des identifiants de sous-réseaux, de type PID par exemple, du réseau de communication 1, avec au moins une adresse réseau d'un terminal utilisateur 3, l'adresse réseau comprenant a minima une adresse IP du terminal utilisateur. Les identifiants de sous-réseaux correspondent à des qualités de service respectives (premium par souscription, à la demande, ou non premium par exemple). Comme précédemment détaillé, l'adresse réseau peut en outre comprendre un numéro de port. En outre, la table de données peut mettre en correspondance les identifiants de sous-réseau et les adresses réseaux avec des identifiants utilisateur. De tels identifiants utilisateur peuvent être initialement partagés entre le premier serveur 2 et le second serveur 4.

A une étape 202, une requête est reçue par le premier serveur 2 depuis le second serveur 4, la requête requérant des informations liées au réseau 1 dont l'opérateur réseau du premier serveur 2 est en charge.

En réponse à une telle requête, au moins une partie de la table de données peut être transmise par le premier serveur 2 au second serveur 4, à une étape 203, la partie comprenant au moins comprenant les correspondances entre chaque identifiant de sous-réseau et les adresses réseau de terminal utilisateur. Comme détaillé précédemment, la partie de la table de données transmise dépend du degré de coopération entre le fournisseur de service et l'opérateur réseau. En effet, elle peut en outre comprendre les types d'utilisateur et les identifiants utilisateur.

Le procédé peut éventuellement comprendre une étape 204 de réception d'une requête de changement de qualité de service pour un utilisateur, d'une première qualité de service (par exemple non premium) à une deuxième qualité de service (par exemple premium). Une telle requête peut être reçue suite à l'activation d'un turbo bouton par un utilisateur. La requête est alors reçue via le réseau cœur 5 depuis le terminal utilisateur 3. En variante, une telle requête peut être envoyée par le second serveur 4 dans le cadre d'un service « sponsored data connectivity ». Dans ce cas, la requête comprend un identifiant d'au moins un utilisateur pour lequel le fournisseur de service requiert une mise à jour du PID de l'utilisateur dans la table de données par l'opérateur de réseau.

A une étape 205, la table de données est mise à jour par l'opérateur de réseau, de la manière expliquée précédemment lorsque la table de données est dynamique. Dans le cas d'une table de données statique, seule la correspondance entre l'identifiant utilisateur et le PID est mis à jour (pas de changement de correspondance avec les adresses réseau) mais l'utilisateur se voit attribuer des adresses réseau associées au PID de la deuxième qualité de service pour ses prochaines sessions.

A une étape 206, au moins une partie de la table de données ainsi mise à jour peut être transmise au fournisseur de service, ce qui est uniquement nécessaire dans le cas d'une table de données dynamique. La transmission peut être effectuée en fonction d'une fréquence déterminée de transmission de la partie de la table de données.

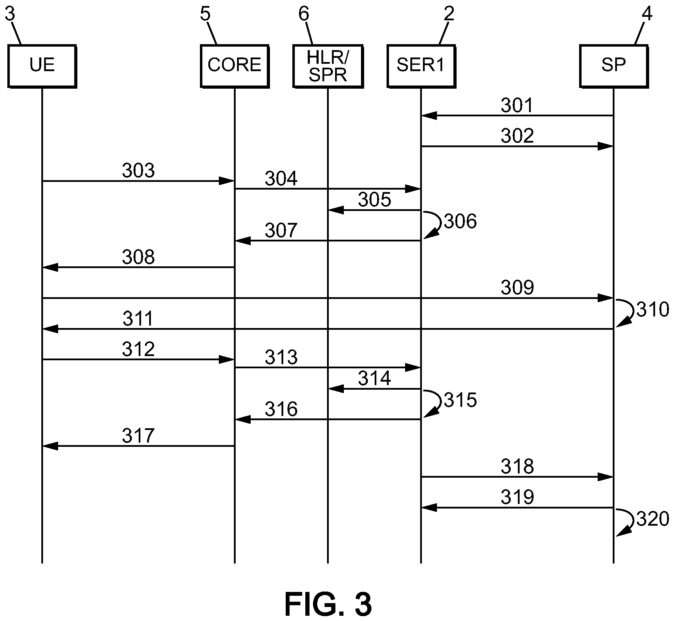

Les différentes mises en œuvre pratiques du procédé général de la figure 2 sont illustrées en référence aux figures 3 à 6.

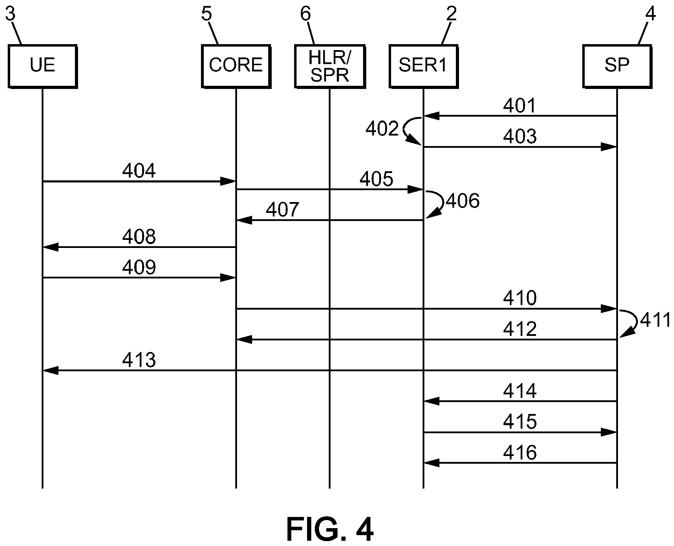

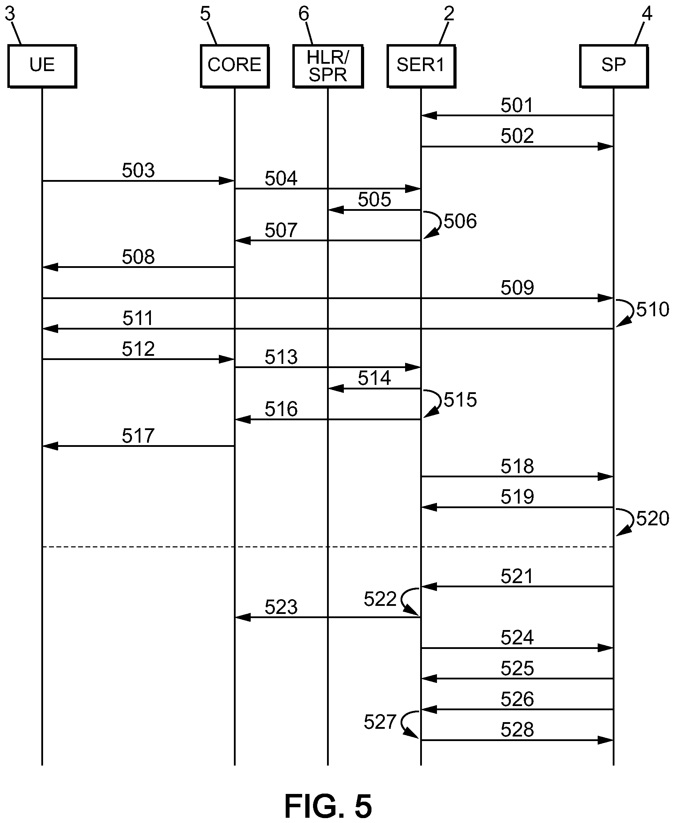

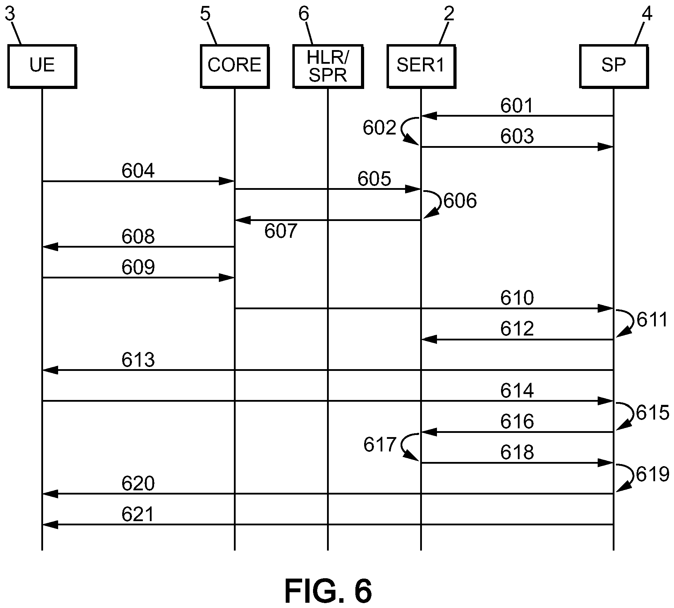

Préalablement à la première étape de chacun de ces modes de réalisation, un accord entre le fournisseur de service et l'opérateur réseau peut être réalisé afin de permettre l'échange d'informations entre le premier serveur 2 et le second serveur 4. Un tel accord peut porter sur la caractérisation de sous-réseaux virtuels via le concept de PID introduit dans la norme ALTO précitée. Pour ce qui concerne les applications « sponsored data connectivity » (Figures 4 et 6) et MOSAP (Figure 5), un tel accord peut également porter sur la définition de métriques de qualité d'expérience caractérisant chacun des PID à un instant t.

La **figure 3** est un diagramme illustrant les étapes d'un procédé selon un premier mode de réalisation. Selon ce mode de réalisation, l'activation d'un turbo bouton est effectuée par un utilisateur auprès de l'opérateur réseau et la notification en est faite au fournisseur de service.

Le premier serveur 2 stocke initialement une table de PID mettant en correspondance des PID de sous-réseaux virtuels avec des adresses réseaux de terminaux utilisateur.

A une étape 301, le second serveur 4 du fournisseur de service envoie une requête au premier serveur 2 de l'opérateur de service, la requête requérant des informations relatives au réseau 1 dont l'opérateur de réseau est en charge.

A une étape 302, en réponse à la requête reçue, le premier serveur 2 envoie au second serveur 4 au moins une partie de la table de PID qu'il stocke. La partie comprend au minimum les correspondances entre les identifiants PID des sous-réseaux virtuels et les adresses réseaux des terminaux utilisateur.

A une étape 303, le terminal utilisateur 3 requiert l'établissement d'une session par l'allocation d'une adresse réseau dans le réseau 1 par l'intermédiaire du réseau cœur 5. Le réseau cœur 5 requiert alors auprès du premier serveur 2, lors d'une étape 304, l'allocation d'un PID de sous-réseau virtuel pour la session en cours d'établissement. A cet effet, le premier serveur 2 requiert des informations liées au type de l'utilisateur du terminal 3, auprès de la base de données de profils d'utilisateurs 6, à une étape 305. Le type d'utilisateur issu de la base de données de profils d'utilisateurs peut correspondre à un abonnement de type « premium » par exemple. Par défaut, l'utilisateur peut être considéré comme « non premium ».

A une étape 306, en fonction du type d'utilisateur (et éventuellement en fonction de la localisation du terminal utilisateur 3), un identifiant PID est associé à l'utilisateur du terminal 3, et une adresse réseau est attribuée en fonction du PID alloué, l'adresse réseau étant déterminée à partir de la table de PID. L'adresse réseau ainsi déterminée est transmise à une étape 307 au réseau cœur 5 pour allocation au terminal utilisateur 3 à une étape 308.

A une étape 309, le terminal utilisateur 3 envoie une requête d'authentification et de service au second serveur 4, en utilisant l'adresse réseau qui lui a précédemment été allouée. La requête de service précise en outre le type de service requis. Le second serveur 4, sur réception de la requête d'authentification et de service, consulte la partie de la table de PID reçue à l'étape 2, afin de déduire un identifiant PID de l'adresse réseau dont est issue la requête, à une étape 310.

A partir du PID déterminé, et au vu des accords préalables entre le fournisseur de service et l'opérateur réseau, le second serveur 4 fournit un service au terminal utilisateur 3 selon une qualité de service qui correspond au sous-réseau identifié par le PID déterminé. Ainsi, si l'utilisateur est un abonné premium pour l'opérateur de réseau, le fournisseur de service mettra en œuvre un service premium pour cet utilisateur, permettant ainsi la mise en œuvre d'une politique de qualité de service différenciée par sous-réseaux, qui est commune au fournisseur de service et à l'opérateur de réseau.

On considère pour les étapes suivantes, à titre d'exemple, que l'utilisateur du terminal utilisateur 3 est un utilisateur de type non premium. Par conséquent, il est associé à un PID correspondant aux utilisateurs non premium et reçoit un service non premium de la part de l'utilisateur de service à l'étape 311.

A une étape 312, l'utilisateur active un service de type turbo bouton ce qui provoque l'envoi d'une requête de changement de qualité de service d'une première qualité de service (non premium) à une deuxième qualité de service (premium à la demande). Sur réception de la requête de changement de qualité de service par le réseau cœur 5, la requête est transférée au premier serveur 1 pour réallocation d'un PID à l'utilisateur du terminal 3.

A une étape 314, le premier serveur met en œuvre une étape optionnelle de vérification auprès de la base de données de profils d'utilisateurs 6, de l'éligibilité de l'utilisateur pour le service turbo bouton.

A une étape 315, dans le cas où l'utilisateur est éligible pour le service turbo bouton, un nouvel identifiant PID est attribué à l'utilisateur en fonction de la localisation du réseau (optionnel) et en fonction de la deuxième qualité de service requise. La table de PID est alors mise à jour (cas d'une table de PID dynamique) en associant les adresses réseaux des sessions en cours de l'utilisateur ayant requis le changement de service, avec l'identifiant PID correspondant à la deuxième qualité de service.

La mise à jour est transmise au réseau cœur 5 à une étape 316, et une confirmation de changement de qualité de service peut être envoyée au terminal utilisateur à une étape 317.

A une étape 318, une partie de la table de PID mise à jour est transmise au second serveur 4 du fournisseur de service. La partie de la table de PID mise à jour comprend au moins la mise à jour de la correspondance entre les adresses réseau de l'utilisateur qui concernent le fournisseur de service (d'autres adresses réseaux pouvant être associées à d'autres services) et le PID de la qualité de service nouvellement attribuée (deuxième qualité de service).

A une étape 319, le second serveur 4 peut confirmer la réception de la table de PID mise à jour.

A une étape 320, le second serveur 4 traite les sessions en cours de l'utilisateur selon la seconde qualité de service (premium), conformément à la partie de la table de PID mise à jour reçue.

A noter que dans le cas d'une table de PID statique, la table de PID est mise à jour simplement en changeant entre l'identifiant utilisateur et l'identifiant PID : les adresses réseaux des sessions en cours ne sont pas associées au PID de la seconde qualité de service, seules les sessions futures se verront attribuer un identifiant PID correspondant à la deuxième qualité de service.

La **figure 4** est un diagramme illustrant les étapes d'un procédé selon un deuxième mode de réalisation de l'invention.

Selon le deuxième mode de réalisation, l'opérateur réseau est rétribué pour la mise en œuvre d'une qualité de service requise par le fournisseur de service (dans un contexte « sponsored data connectivity »).

Au préalable, des identifiants utilisateur sont partagés entre le fournisseur de service et l'opérateur de réseau. Il peut s'agir d'identifiants de type MSISDN, comme précédemment détaillé. Le fournisseur de service et l'opérateur réseau peuvent se mettre d'accord sur les conditions d'allocation des différents PID (identité des utilisateurs, listes des services sponsorisés, localisation éligible, plage horaire éligible, etc).

A une étape 401, le second serveur 4 envoie une requête au premier serveur, la requête comprenant une liste d'utilisateurs (identifiés par leur MSISDN par exemple) ayant une option premium pour le fournisseur de service. Les identifiants des utilisateurs non premium ne sont pas nécessairement fournis au premier serveur 2 de l'opérateur réseau. Une telle requête peut être vue comme une requête de changement de qualité de service d'une première qualité de service (non premium) à une deuxième qualité de service (premium), issue du second serveur 4 du fournisseur de service. Dans le présent exemple, seuls les identifiants utilisateur en correspondance avec le PID du sous-réseau (ou des sous-réseaux) premium sont renseignés dans la table de PID stockée dans le premier serveur 2.

A noter que plusieurs PID peuvent être négociés entre le fournisseur de service et l'opérateur pour les différentes options premium au catalogue du fournisseur de service. Les utilisateurs non premium vis-à-vis du fournisseur de service peuvent être regroupés dans un PID « nonSDC (Sponsored Data Connectivity) » tandis que les utilisateurs premium (vis-à-vis du fournisseur de service) sont regroupés dans le PID « SDC ».

Le premier serveur 2 met alors à jour la table de PID en associant les identifiants utilisateur reçus dans la requête, au PID « SDC », à une étape 402.

Une partie de la table mise à jour est renvoyée au second serveur 4, à une étape 403, avec éventuellement une table de coûts mettant en correspondance des coûts avec les PID « SDC » et « nonSDC » (pour rétribution, comme détaillé ultérieurement). La partie de la table de PID mise à jour comprend au moins les adresses réseaux des sessions en cours pour les utilisateurs identifiés par les identifiants utilisateur, et les identifiants de PID (table de PID dynamique). Dans le cas d'une table de PID fixe, la partie transmise comprend les plages d'adresses réseau, en correspondance avec les PID et les identifiants utilisateur.

A une étape 404, le terminal utilisateur requiert l'établissement d'une session par l'allocation d'une adresse réseau dans le réseau 1, par l'intermédiaire du réseau cœur 5. Le réseau cœur 5 requiert alors auprès du premier serveur 2, lors d'une étape 405, l'allocation d'un PID de sous-réseau virtuel pour la session en cours d'établissement. A cet effet, le premier serveur consulte la table de PID mise à jour suite à l'étape 402, et détermine le PID correspondant à l'identifiant utilisateur présent dans la requête d'établissement de session, à une étape 406. Une adresse réseau est alors attribuée, pendant l'étape 406, au terminal utilisateur 3 en fonction de la correspondance entre adresses réseau et identifiants PID dans la table de PID. Dans le cas d'une table de PID fixe, l'adresse réseau attribuée est comprise dans la plage d'adresses réseaux en correspondance avec l'identifiant PID attribué à l'utilisateur. Dans le cas d'une table de PID dynamique, l'adresse réseau attribuée est renseignée dans la table de PID en correspondance avec l'identifiant utilisateur de l'utilisateur du terminal 3, et avec le PID attribué. Une partie de la table de PID ainsi mise à jour peut ensuite être transmise, de manière périodique par exemple, au second serveur 4, pour mise à jour auprès du second serveur 4.

En outre, à l'étape 406, le premier serveur 2 crée des données d'attachement réseau (identité de l'utilisateur, localisation, heure, etc) afin d'utiliser ces données pour confirmer toute demande de réallocation de PID par le fournisseur de service. En effet, l'opérateur s'assurera que le contexte est conforme aux conditions négociées préalablement avec le fournisseur de service.

Dans l'exemple représenté en figure 4, il est considéré que l'utilisateur ayant formulé la requête d'attachement au réseau, fait partie des utilisateurs identifiés par le fournisseur de service à l'étape 401, comme étant un utilisateur premium pour le fournisseur de service. Par conséquent, le PID « SDC » lui est attribué.

L'adresse réseau allouée ainsi que le PID attribué sont ensuite transmis à une étape 407 au réseau cœur 5, qui transmet l'adresse réseau allouée au terminal utilisateur 3 à une étape 408.

A une étape 409, le terminal utilisateur 3 requiert, à partir de l'adresse réseau qui lui a été attribuée, un service auprès du second serveur 4, la requête de service transitant par le réseau 1. La requête de service précise en outre le type de service requis. De manière optionnelle, le réseau cœur 5 peut introduire l'identifiant utilisateur dans la requête de service, puis transférer la requête ainsi modifiée au second serveur à une étape 410.

A une étape 411, le second serveur 4 vérifie que le terminal utilisateur a une adresse réseau associée à un PID «SDC». Dans le présente exemple, l'adresse réseau du terminal utilisateur 3 est bien associée à une qualité de service premium pour le fournisseur de service, et par conséquent, le second serveur 4 envoie au premier serveur 2, à une étape 412, une confirmation qu'une qualité de service de type « SDC » est à mettre en œuvre pour le terminal utilisateur 3.

A une étape 413, un service de type premium est assuré par le second serveur 4 auprès du terminal utilisateur. Le service transitant également par le réseau 1, l'opérateur réseau met en œuvre une qualité de service de type premium « SDC » pour cet utilisateur.

La session de service s'achève à une étape 414, à l'issue de laquelle le second serveur 4 peut envoyer au premier serveur 2 les informations suivantes :
- identifiant utilisateur de l'utilisateur pour lequel la session vient de s'achever (cette identité étant partagée par le fournisseur de service et par l'opérateur réseau comme précédemment expliqué) ;
- identifiant PID correspondant à l'identité utilisateur ;
- identité du fournisseur de service ;
- identité de sponsor.

Les deux premières informations ne sont aucunement échangées dans la norme actuelle de « sponsored data connectivity » et constituent de nouveaux « AVP » (pour « Attribute Value Pair » en anglais).

A partir de ces informations, et à une étape 415, le premier serveur 2 peut générer et transmettre au second serveur 4 une requête en rétribution, dépendant par exemple de la durée de la session, du type de service sponsorisé, du coût associé, dans une table de coûts, au PID attribué au terminal utilisateur 3. A une étape 320, le second serveur 4 peut envoyer au premier serveur 2 une confirmation de réception de la requête en rétribution.

La norme « sponsored data connectivity » est alors enrichie selon l'invention, et ajoutant aux facteurs déterminant le taux de rétribution de l'opérateur réseau, une unité liée à la qualité de service. En effet, la norme actuelle prend uniquement en compte la quantité de données transmises pour la rétribution, et non la qualité de service.

La **figure 5** est un diagramme illustrant les étapes d'un procédé selon un troisième mode de réalisation de l'invention.

Selon le troisième mode de réalisation, une amélioration du concept MOSAP de coopération entre fournisseur de service et opérateur réseau est proposée. Le fournisseur de service fournit des informations de qualité d'expérience perçue pour chaque sous-réseau virtuel (et donc pour chaque catégorie d'utilisateur) associé à un PID donné.

Les étapes 501 à 520 sont en tous points similaires aux étapes 301 à 320 décrites en référence à la figure 3.

Le fournisseur de service est en outre apte à remonter des mesures de qualité d'expérience au premier serveur 2.

A cet effet, le second serveur 4 est apte à déterminer un ensemble de métriques, chaque métrique de l'ensemble de métriques étant représentative d'une qualité d'expérience associée à un PID donné. A cet effet, pour les qualités d'expérience des utilisateurs associés au même PID sont compilées afin de déterminer une métrique associée à ce même PID.

L'ensemble de métriques est transmis à une étape 521 au premier serveur 2.

En fonction de l'ensemble de métriques reçu, le second serveur analyse les métriques et détermine une mise à jour d'une politique de qualité de service différenciée par PID, à une étape 522.

La mise à jour de la politique de qualité de service est transmise au réseau cœur 5 à une étape 523 pour sa mise en œuvre. Ainsi, une politique de qualité de service est mise en œuvre de manière différenciée pour chaque adresse réseau de terminal utilisateur, en fonction de l'appartenance de cette adresse réseau à l'un des sous-réseaux virtuels associé à une qualité de service donnée.

A une étape 524, le premier serveur 2 transmet au second serveur 4 une notification, la notification pouvant identifier les flux d'un PID qui peuvent être modifiés par le fournisseur de service au niveau applicatif, des flux de PID qui ont été priorisés ou non priorisés, ou des mises à jour de la table de PID.

A une étape 525, le second serveur peut confirmer la réception de la notification reçue à l'étape 524.

A une étape 526, le second serveur 4 peut remonter un nouvel ensemble de métriques par PID au premier serveur.

Le premier serveur 2 peut analyser ce nouvel ensemble de métrique et décider qu'aucune modification de la politique de qualité de service n'est à mettre en œuvre, à une étape 527. Par exemple, aucune modification de la qualité de service ne sera requise si les métriques, reçues de l'étape 526, sont en cohérence avec la qualité de service attendue. Le premier serveur 2 peut alors confirmer la réception du nouvel ensemble de métriques à une étape 528.

Ainsi, la présente invention permet l'enrichissement de la norme MOSAP :
- en permettant au fournisseur de service de fournir des ensembles de métriques de qualité d'expérience perçue par chaque sous-réseau d'utilisateurs (étape 521);
- en permettant à l'opérateur de réseau de prioriser les flux à partir de la réception des ensembles de métriques (étapes 522 et 523) ;
- en permettant à l'opérateur de réseau de notifier le fournisseur de la mise à jour de la table de PID (étape 524) ;
- en permettant à l'opérateur de réseau de notifier le fournisseur de service de la priorisation des flux mise en œuvre dans le réseau pour chaque PID (étape 524) ; et
- en permettant à l'opérateur de réseau de notifier le fournisseur de service sur la priorisation de niveau applicative qui peut être mise en œuvre par le fournisseur de service afin d'assurer une cohérence des actions de niveaux réseau et applicatif pour chaque PID (étape 524).

La **figure 6** est un diagramme illustrant les étapes d'un procédé selon un quatrième mode de réalisation de l'invention.

Selon le quatrième mode de réalisation, une amélioration de la norme « sponsored data connectivity » est proposée. Contrairement à l'exemple de la figure 4, on considère ici que l'utilisateur requérant une allocation d'adresse réseau n'a pas été placé dans la liste envoyée par le fournisseur de service à l'opérateur réseau, la liste comprenant les identifiants utilisateur pour lequel une qualité de service premium est requise par le fournisseur de service. La présente amélioration propose alors de permettre la réallocation d'un PID initialement attribué à un utilisateur. On considère également que cet utilisateur est non premium du point de vue de l'opérateur de réseau (il n'a pas d'abonnement premium et n'a pas activé de turbo bouton auprès de l'opérateur de réseau).

Au préalable, des identifiants utilisateur sont partagés entre le fournisseur de service et l'opérateur de réseau. Il peut s'agir d'identifiants de type MSISDN, comme précédemment détaillé. Le fournisseur de service et l'opérateur réseau peuvent se mettre d'accord sur les conditions d'allocation des différents PID (identité des utilisateurs, listes des services sponsorisés, localisation éligible, plage horaire éligible, etc.).

A une étape 601, le second serveur 4 envoie une requête au premier serveur, la requête comprenant une liste d'utilisateurs (identifiés par leur identifiant utilisateur, tel que le MSISDN par exemple) ayant une option premium pour le fournisseur de service. Les identifiants des utilisateurs non premium ne sont pas nécessairement fournis au premier serveur 2 de l'opérateur réseau. Une telle requête peut être vue comme une requête de changement de qualité de service d'une première qualité de service (non premium) à une deuxième qualité de service (premium), issue du second serveur 4 du fournisseur de service. Dans le présent exemple, seuls les identifiants utilisateurs en correspondance avec le PID du sous-réseau (ou des sous-réseaux) premium sont renseignés dans la table de PID stockée dans le premier serveur 2.

A noter que plusieurs PID peuvent être négociés entre le fournisseur de service et l'opérateur pour les différentes options premium au catalogue du fournisseur de service. Les utilisateurs non premium vis-à-vis du fournisseur de service peuvent être regroupés dans un PID « nonSDC » tandis que les utilisateurs premium (vis-à-vis du fournisseur de service) sont regroupés dans le PID « SDC ».

Le premier serveur 2 met alors à jour la table de PID en associant les identifiants utilisateur reçus dans la requête, au PID « SDC », à une étape 602.

Une partie de la table mise à jour est renvoyée au second serveur 4, à une étape 603, avec éventuellement une table de coûts mettant en correspondance des coûts avec les PID « SDC » et « nonSDC » (pour rétribution, comme détaillé ultérieurement). La partie de la table de PID mise à jour comprend au moins les adresses réseaux des sessions en cours pour les utilisateurs identifiés par les identifiants utilisateurs, et les identifiants de PID (table de PID dynamique). Dans le cas d'une table de PID fixe, la partie transmise comprend les plages d'adresses réseaux, en correspondance avec les PID et les identifiants utilisateur.

A une étape 604, le terminal utilisateur 3 requiert l'établissement d'une session par l'allocation d'une adresse réseau dans le réseau 1, par l'intermédiaire du réseau cœur 5. Le réseau cœur requiert alors auprès du premier serveur 2, lors d'une étape 605, l'allocation d'un PID de sous-réseau virtuel pour la session en cours d'établissement. A cet effet, le premier serveur consulte la table de PID mise à jour suite à l'étape 602, et constate, dans le présent exemple, que le fournisseur de service n'a pas requis la mise en œuvre d'un service premium pour cet utilisateur. Par conséquent, le premier serveur 1 alloue une adresse réseau correspondant à la catégorisation PID « non SDC » de l'utilisateur par l'opérateur de réseau. Comme précédemment détaillé, dans cet exemple, l'utilisateur est également non premium du point de vue de l'opérateur réseau. Une adresse réseau est alors attribuée, pendant l'étape 606, au terminal utilisateur 3, l'adresse réseau étant en correspondance avec le PID du sous réseau non premium dans la table de PID. Dans le cas d'une table de PID fixe, l'adresse réseau attribuée est comprise dans la plage d'adresses réseaux en correspondance le PID du sous réseau non premium. Dans le cas d'une table de PID dynamique, l'adresse réseau attribuée est renseignée dans la table de PID en correspondance avec l'identifiant utilisateur de l'utilisateur du terminal 3, et avec le PID du sous-réseau non premium. Une partie de la table de PID ainsi mise à jour peut ensuite être transmise, de manière périodique par exemple, au second serveur 4, pour mise à jour auprès du second serveur 4.

En outre, à l'étape 606, le premier serveur 2 crée des données d'attachement réseau (identité de l'utilisateur, localisation, heure, etc) afin d'utiliser ces données pour confirmer toute demande de réallocation de PID par le fournisseur de service. En effet, l'opérateur s'assurera que le contexte est conforme aux conditions négociées préalablement avec le fournisseur de service.

L'adresse réseau allouée ainsi que le PID attribué sont ensuite transmis à une étape 607 au réseau cœur 5, qui transmet l'adresse réseau allouée au terminal utilisateur 3 à une étape 608.

A une étape 609, le terminal utilisateur 3 requiert, à partir de l'adresse réseau qui lui a été attribuée, un service auprès du second serveur 4, la requête de service transitant par le réseau 1. La requête de service précise en outre le type de service requis. De manière optionnelle, le réseau cœur 5 peut introduire l'identifiant utilisateur dans la requête de service, puis transférer la requête ainsi modifiée au second serveur à une étape 610.

A une étape 611, le second serveur 4 vérifie que le terminal utilisateur a une adresse réseau associée à un PID « SDC ». Dans le présent exemple, l'adresse réseau du terminal utilisateur 3 est associée à une qualité de service non premium pour le fournisseur de service, et par conséquent, le second serveur 4 envoie au premier serveur 2, à une étape 612, une confirmation qu'une qualité de service de type « nonSDC » est à mettre en œuvre pour le terminal utilisateur 3.

A une étape 613, un service de type non premium est assuré par le second serveur 4 auprès du terminal utilisateur. Le service transitant également par le réseau 1, l'opérateur réseau met en œuvre une qualité de service de type « nonSDC » pour cet utilisateur.

A une étape 614, le terminal utilisateur 3 requiert auprès du second serveur 4 un changement de qualité de service afin de bénéficier d'une qualité de service premium. La requête comprend l'adresse réseau du terminal utilisateur 3 et peut en outre comprendre le type de service requis.

A une étape 615, le second serveur 4 vérifie que l'abonnement de l'utilisateur permet une réallocation de PID vers une qualité de service premium.

En cas de vérification positive, une requête de changement de qualité de service est envoyée au premier serveur à une étape 616, la requête requérant un changement de qualité de service d'une première qualité de service (« nonSDC » ou non premium dans cet exemple) vers une deuxième qualité de service (« SDC » ou premium dans cet exemple). Une telle requête identifie par ailleurs l'utilisateur au moyen du MSISDN de l'utilisateur du terminal 3.

A une étape 617, le premier serveur 2 met à jour la table de PID en associant l'identifiant utilisateur avec le PID « SDC ». Si la table de PID est dynamique, toutes les adresses réseau de session en cours sont en outre déplacées pour correspondre au PID « SDC » dans la table de PID. Dans le cas d'une table de PID fixe, seules les prochaines sessions de l'utilisateur auront pour adresses réseau respectives, des adresses réseau comprises dans la plage fixe d'adresses réseau associée au PID « SDC » dans la table de PID fixe.

Une confirmation de la mise à jour peut être transmise au second serveur 4, avec éventuellement une partie de la table de PID mise à jour, la partie comprenant l'association entre le PID « SDC » et l'identifiant utilisateur de l'utilisateur (et les adresses réseau des sessions de l'utilisateur pour une table de PID dynamique).

A une étape 619, le fournisseur de service traite alors la session en cours du terminal utilisateur 3 comme premium, et une confirmation peut être envoyée à une étape 620 au terminal utilisateur.

Le service est alors délivré par le second serveur 4 au terminal utilisateur 3, avec une qualité de service de type premium, à une étape 621. Ce service est également premium du point de vue de l'opérateur, et ainsi l'invention permet la mise en œuvre d'une politique de qualité de service différenciée par sous-réseaux virtuels, commune au fournisseur de service et à l'opérateur réseau.

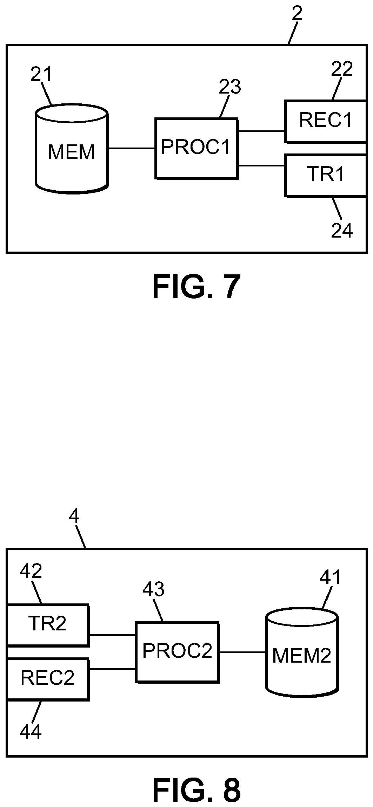

La **figure 7** présente un premier serveur 2 d'un opérateur de réseau selon un mode de réalisation de l'invention.

Le premier serveur 2 est apte à communiquer avec un second serveur d'un fournisseur de service, via l'interface Rx définie dans le standard 3GPP « Technical Specification Group Core Network and Terminals ; Policy and Charging Control over Rx reference point », TS 29-214, version 11.8.0 du 15 mars 2013.

Le premier serveur 2 comprend une unité de stockage 21 d'une table de données (table de PID) mettant en correspondance des identifiants PID de sous-réseaux du réseau de communication associés à des qualités de service respectives (premium, non premium par exemple), avec au moins une adresse réseau d'un terminal utilisateur, l'adresse réseau comprenant a minima une adresse IP du terminal utilisateur.

Le premier serveur 2 comprend en outre une unité de réception 22 d'une requête depuis un second serveur d'un fournisseur de service, la requête requérant des informations liées au réseau de communication. La requête peut être traitée par une unité de traitement 23 apte à déterminer une partie de la table de données à transmettre au second serveur 4.

Le premier serveur 2 comprend en outre une unité de transmission 24 de la partie de la table de données au second serveur 4, la partie comprenant les correspondances entre chaque identifiant de sous-réseau et l'adresse réseau de terminal utilisateur.

Le premier serveur 2 est en outre apte à mettre en œuvre les étapes qui lui ont été précédemment attribuées en référence aux figures 2 à 6.

La **figure 8** présente un second serveur 4 d'un fournisseur de service selon un mode de réalisation de l'invention.

Le second serveur 4 est apte à communiquer avec un serveur d'un opérateur de réseau via l'interface Rx précédemment citée.

Le second serveur 4 comprend une unité de transmission 42 pour transmettre au premier serveur 2 une requête, la requête requérant des informations liées au réseau de communication. Le second serveur 4 comprend en outre une unité de réception 44 d'au moins une partie d'une table de données stockée dans le premier serveur 2 d'opérateur réseau, la partie comprenant des correspondances entre des identifiants de sous-réseaux du réseau de communication et au moins une adresse réseau d'un terminal utilisateur, l'adresse réseau comprenant une adresse IP du terminal utilisateur. Le second serveur comprend une unité de stockage 41 de la partie de la table de données.

Le second serveur 4 comprend en outre une unité de traitement 43. Selon un mode de réalisation, l'unité de stockage 41 stocke une table de correspondances entre des identifiants de sous-réseau et des qualités de services respectives et l'unité de traitement 43 est une unité de fourniture d'un service à un terminal utilisateur selon une qualité de service correspondant au sous-réseau mis en correspondance avec l'adresse réseau du terminal utilisateur dans la partie de la table de données. Ainsi, ce mode de réalisation permet la mise en œuvre d'une politique de qualité de service qui est commune au fournisseur de service et à l'opérateur de réseau.

Selon un autre mode de réalisation, l'unité de traitement 43 est une unité de détermination d'un ensemble de métriques, chaque métrique étant représentative d'une qualité d'expérience dans un sous-réseau du réseau de communication, et l'unité de transmission 42 est en outre apte à transmettre l'ensemble de métriques déterminé au premier serveur 1 d'opérateur de réseau. Un tel mode de réalisation permet ainsi de mettre en œuvre les améliorations de la norme MOSAP qui ont été listées en référence à la figure 5.

Le second serveur 4 est en outre apte à mettre en œuvre les étapes qui lui ont été précédemment attribuées en référence aux figures 2 à 6.

Ainsi, la présente invention permet d'enrichir la manière de créer des sous-réseaux virtuels dans un réseau de communication tel qu'un réseau mobile par exemple. La configuration actuelle d'APN (pour « Access Point Name ») au niveau d'une passerelle GGSN d'interconnexion entre le réseau mobile et les réseaux IP externes peut correspondre à la mise en œuvre de réseaux virtuels : à un APN correspond un ensemble de services mobiles de données. L'utilisation de PID dérivée de la norme ALTO permet une richesse accrue dans la construction de sous-réseaux virtuels avec la prise en compte de plus de critères (critère de qualité de service, ou de localisation de l'utilisateur).

En outre, la cohérence entre des actions de catégorisation des utilisateurs entre opérateur réseau et fournisseur de service est permise, grâce à l'échange d'au moins une partie d'une table de PID, et éventuellement de tables de coûts.

La présente invention permet de plus la prise en compte du PID lors de l'attribution d'une adresse réseau à un terminal utilisateur.

De surcroît, une procédure de réallocation de PID est rendue possible par l'activation de services de type data-booster ou turbo bouton, durant laquelle une procédure de contrôle du PID de rattachement de l'utilisateur est mise en œuvre.

La table de PID peut par ailleurs inclure non seulement l'adresse IP mais également le numéro de port, ce qui permet de différencier les sessions en cours pour une même adresse IP (particulièrement utile dans le cas d'un adressage de type NAT). En complément, la table de PID peut en outre comprendre l'identifiant utilisateur de l'utilisateur du terminal (identifiant de type MSISDN par exemple).

De plus, comme précédemment détaillé, la présente invention peut permettre l'enrichissement de la norme « sponsored data connectivity » ou encore MOSAP.

Bien entendu, la présente invention ne se limite pas aux formes de réalisation décrites ci-avant à titre d'exemple, mais peut s'étendre à d'autres variantes.

## Revendications

1. Procédé de transmission d'informations relatives à un réseau de communication (1), mis en œuvre par un premier serveur (2) d'un réseau de communication, le procédé comprenant les étapes suivantes :
- stockage (201) d'une table de données mettant en correspondance des identifiants de sous-réseaux du réseau de communication associés à des qualités de service respectives, avec au moins une adresse réseau d'un terminal utilisateur (3), ladite adresse réseau comprenant une adresse IP du terminal utilisateur ;
- réception (202) d'une requête depuis un second serveur (4) d'un fournisseur de service, ladite requête requérant des informations liées audit réseau de communication ;
- transmission (203) d'au moins une partie de la table de données audit second serveur, ladite partie comprenant les correspondances entre chaque identifiant de sous-réseau et ladite au moins une adresse réseau de terminal utilisateur ;
la table de données mettant en outre un identifiant utilisateur en correspondance avec l'adresse réseau d'un terminal utilisateur (3) et avec l'identifiant du sous-réseau correspondant, ledit identifiant utilisateur étant partagé par le premier serveur (2) et le second serveur (4), la partie transmise au second serveur comprenant les correspondances entre chaque identifiant de sous-réseau, chaque adresse réseau et chaque identifiant utilisateur et le procédé comprenant en outre les étapes suivantes :
- réception, depuis le second serveur, d'une requête de changement de qualité de service d'une première qualité de service vers une seconde qualité de service pour un ensemble de terminaux utilisateurs comprenant au moins un terminal utilisateur identifié par un identifiant utilisateur ;
- mise à jour de la table de données en mettant en correspondance chaque adresse réseau correspondant audit identifiant utilisateur dans la table de données, avec l'identifiant de sous-réseau associé à la deuxième qualité de service ; et
mise en œuvre d'une politique de qualité de service différenciée par adresse réseau en fonction d'une appartenance de chaque adresse réseau à un sous-réseau du réseau de communication, ladite appartenance étant déterminée à partir de la table de données.

2. Procédé selon la revendication 1, comprenant en outre :
- sur réception depuis un premier terminal utilisateur (3) identifié auprès du premier serveur (2) par un premier identifiant utilisateur, d'une requête de changement de qualité de service d'une première qualité de service vers une seconde qualité de service, mise à jour de la table de données en mettant en correspondance chaque adresse réseau correspondant audit premier identifiant utilisateur dans la table de données, avec l'identifiant de sous-réseau associé à la deuxième qualité de service; et
- transmission d'au moins une partie de la table de données mise à jour au second serveur (4).

3. Procédé selon la revendication 2, dans lequel ladite au moins une partie de la table de données est transmise selon une fréquence prédéterminée au second serveur (4), et dans lequel la partie de la table de données mise à jour est transmise en fonction de ladite fréquence prédéterminée.

4. Procédé selon l'une des revendications précédentes, comprenant une étape préalable de transmission au second serveur (4) d'une correspondance entre chaque identifiant de sous-réseau et chaque qualité de service correspondante, en vue de la fourniture d'un service à un terminal utilisateur (3) selon une qualité de service correspondant au sous-réseau mis en correspondance avec l'adresse réseau du terminal utilisateur dans la table de données.

5. Procédé selon l'une des revendications précédentes, dans lequel chaque adresse réseau comprend une adresse IP et un numéro de port.

6. Procédé selon l'une des revendications précédentes, dans lequel une politique de qualité de service différenciée par adresse réseau est mise en œuvre dans le réseau de communication (1) et dans lequel le procédé comprend en outre les étapes suivantes :
- réception depuis le second serveur (4) d'un ensemble de métriques, chaque métrique de l'ensemble de métriques étant représentative d'une qualité d'expérience dans un sous-réseau du réseau de communication ;
- mise à jour, en fonction de l'ensemble de métriques reçues, d'une politique de qualité de service par adresse réseau différenciée en fonction d'une appartenance de chaque adresse réseau à un sous-réseau du réseau de communication, ladite appartenance étant déterminée à partir de la table de données.

7. Programme d'ordinateur comportant des instructions pour la mise en œuvre du procédé selon l'une quelconque des revendications précédentes, lorsque ce programme est exécuté par un processeur.

8. Système de coopération entre un fournisseur de service et un réseau de communication comprenant un premier serveur (4) dudit fournisseur de service et un second serveur (2) d'opérateur dudit réseau, ledit second serveur (2) d'opérateur dudit réseau étant adapté pour mettre en œuvre les étapes de la revendication 1 ; ledit premier serveur dudit fournisseur de service étant destiné à être utilisé par un fournisseur de service pour communiquer avec le second serveur d'opérateur dudit réseau (2) et comprenant :
- une unité de transmission (42) audit second serveur d'opérateur dudit réseau d'une requête, ladite requête requérant des informations liées audit réseau de communication ;
- une unité de réception (44) d'au moins une partie d'une table de données stockée dans le serveur d'opérateur de réseau, ladite partie comprenant des correspondances entre des identifiants de sous-réseaux du réseau de communication et au moins une adresse réseau d'un terminal utilisateur, ladite adresse réseau comprenant une adresse IP du terminal utilisateur ;
- une unité de stockage (41) de ladite partie de la table de données ; et
le premier serveur dudit fournisseur de service (4) comprenant en outre une unité de détermination (43) d'un ensemble de métriques, chaque métrique étant représentative d'une qualité d'expérience dans un sous-réseau du réseau de communication, l'unité de transmission (42) étant en outre adapté à transmettre l'ensemble de métriques déterminé audit second serveur d'opérateur dudit réseau.

## Patentansprüche

1. Verfahren zur Übertragung von Informationen in Bezug auf ein Kommunikationsnetzwerk (1), das durch einen ersten Server (2) eines Kommunikationsnetzwerks durchgeführt wird, das Verfahren umfassend die folgenden Schritte:
- Speichern (201) einer Datentabelle, die Kennungen von Unternetzwerken des Kommunikationsnetzwerks, die mit jeweiligen Dienstgüten verknüpft sind, mit mindestens einer Netzwerkadresse eines Benutzerendgeräts (3) in Entsprechung bringt, die Netzwerkadresse umfassend eine IP-Adresse des Benutzerendgeräts;
- Empfangen (202) einer Anforderung von einem zweiten Server (4) eines Dienstanbieters, wobei die Anforderung Informationen anfordert, die mit dem Kommunikationsnetzwerk in Verbindung stehen;
- Übertragen (203) zumindest eines Teils der Datentabelle an den zweiten Server, der Teil umfassend die Entsprechungen zwischen jeder Unternetzwerk-Kennung und der mindestens einen Benutzerendgerät-Netzwerkadresse;
wobei die Datentabelle ferner eine Benutzerkennung mit der Netzwerkadresse eines Benutzerendgeräts (3) und mit der entsprechenden Unternetzwerk-Kennung in Entsprechung bringt, wobei die Benutzerkennung durch den ersten Server (2) und den zweiten Server (4) gemeinsam genutzt wird, wobei der Teil, der an den zweiten Server übertragen wird, die Entsprechungen zwischen jeder Unternetzwerk-Kennung, jeder Netzwerkadresse und jeder Benutzerkennung umfasst und das Verfahren ferner die folgenden Schritte umfasst:
- Empfangen, von dem zweiten Server, einer Anforderung zur Dienstgütenänderung einer ersten Dienstgüte zu einer zweiten Dienstgüte für einen Satz von Benutzergeräten umfassend mindestens ein Benutzergerät, das durch eine Benutzerkennung identifiziert wird;
- Aktualisieren der Datentabelle durch Inentsprechungbringen jeder Netzwerkadresse, die der Benutzerkennung in der Datentabelle entspricht, mit der Unternetzwerk-Kennung, die mit der zweiten Dienstgüte verknüpft ist; und
Umsetzen einer Politik einer differenzierten Dienstgüte nach Netzwerkadressen in Abhängigkeit von einer Zugehörigkeit jeder Netzwerkadresse zu einem Unternetzwerk des Kommunikationsnetzwerks, wobei die Zugehörigkeit anhand der Datentabelle bestimmt wird.

2. Verfahren nach Anspruch 1, ferner umfassend:
- bei Empfang, von einem ersten Benutzerendgerät (3), das beim ersten Server (2) durch eine erste Benutzerkennung identifiziert wird, einer Dienstgüten-Änderungsanforderung einer ersten Dienstgüte zu einer zweiten Dienstgüte, Aktualisieren der Datentabelle durch Inentsprechungbringen jeder Netzwerkadresse, die der ersten Benutzerkennung in der Datentabelle entspricht, mit der Unternetzwerk-Kennung, die mit der zweiten Dienstgüte verknüpft ist; und
- Übertragen zumindest eines Teils der aktualisierten Datentabelle an den zweiten Server (4).

3. Verfahren nach Anspruch 2, wobei der mindestens eine Teil der Datentabelle gemäß einer vorbestimmten Häufigkeit an den zweiten Server (4) übertragen wird und wobei der Teil der aktualisierten Datentabelle in Abhängigkeit von der vorbestimmten Häufigkeit übertragen wird.

4. Verfahren nach einem der vorhergehenden Ansprüche, umfassend einen vorhergehenden Schritt des Übertragens, an den zweiten Server (4), einer Entsprechung zwischen jeder Unternetzwerk-Kennung und jeder entsprechenden Dienstgüte, im Hinblick auf die Bereitstellung eines Dienstes an ein Benutzerendgerät (3) gemäß einer Dienstgüte, die dem Unternetzwerk entspricht, das mit der Netzwerkadresse des Benutzerendgeräts in der Datentabelle in Entsprechung gebracht wurde.

5. Verfahren nach einem der vorhergehenden Ansprüche, wobei jede Netzwerkadresse eine IP-Adresse und eine Portnummer umfasst.

6. Verfahren nach einem der vorhergehenden Ansprüche, wobei eine Politik einer Dienstgüte, die nach Netzwerkadressen differenziert wird, im Kommunikationsnetzwerk (1) umgesetzt wird, und wobei das Verfahren ferner die folgenden Schritte umfasst:
- Empfangen, von dem zweiten Server (4), eines Satzes von Metriken, wobei jede Metrik des Satzes von Metriken für eine Erfahrungsqualität in einem Unternetzwerk des Kommunikationsnetzwerks repräsentativ ist;
- Aktualisieren, in Abhängigkeit von dem Satz von empfangenen Metriken, einer Politik einer Dienstgüte nach Netzwerkadressen, die in Abhängigkeit von einer Zugehörigkeit jeder Netzwerkadresse zu einem Unternetzwerk des Kommunikationsnetzwerks differenziert wird, wobei die Zugehörigkeit anhand der Datentabelle bestimmt wird.

7. Computerprogramm umfassend Anweisungen für die Durchführung des Verfahrens nach einem der vorhergehenden Ansprüche, wenn das Programm durch einen Prozessor ausgeführt wird.

8. System zur Kooperation zwischen einem Dienstanbieter und einem Kommunikationsnetzwerk umfassend einen ersten Server (4) des Dienstanbieters und einen zweiten Server (2) eines Netzwerkbetreibers, wobei der zweite Server (2) des Betreibers des Netzwerks geeignet ist, die Schritte von Anspruch 1 durchzuführen;
wobei der erste Server des Dienstanbieters dazu bestimmt ist, durch einen Dienstanbieter dafür genutzt zu werden, mit dem zweiten Server des Betreibers des Netzwerks (2) zu kommunizieren, und folgendes umfasst:
- eine Einheit (42) zur Übertragung einer Anforderung an den zweiten Server des Betreibers des Netzwerks, wobei die Anforderung Informationen anfordert, die mit dem Kommunikationsnetzwerk in Verbindung stehen;
- eine Einheit zum Empfangen (44) zumindest eines Teils einer Datentabelle, die in dem Server des Netzwerkbetreibers gespeichert ist, wobei der Teil Entsprechungen zwischen Unternetzwerk-Kennungen des Kommunikationsnetzwerks und mindestens einer Netzwerkadresse eines Benutzerendgeräts umfasst, die Netzwerkadresse umfassend eine IP-Adresse des Benutzerendgeräts;
- eine Einheit zur Speicherung (41) des Teils der Datentabelle; und
der erste Server des Dienstanbieters (4) ferner umfassend eine Einheit zur Bestimmung (43) eines Satzes von Metriken, wobei jede Metrik für eine Erfahrungsqualität in einem Unternetzwerk des Kommunikationsnetzwerks repräsentativ ist, wobei die Übertragungseinheit (42) ferner geeignet ist, den bestimmten Satz von Metriken an den zweiten Server des Betreibers des Netzwerks zu übertragen.

## Claims

1. Method for transmitting information relating to a communication network (1), implemented by a first server (2) of a communication network, the method comprising the following steps:
- storing (201) a data table matching identifiers of sub-networks of the communication network that are associated with respective qualities of service, with at least one network address of a user terminal (3), said network address comprising an IP address of the user terminal;
- receiving (202) a request from a second server (4) of a service provider, said request requesting information related to said communication network;
- transmitting (203) at least one portion of the data table to said second server, said portion comprising the matches between each sub-network identifier and said at least one user terminal network address;
the data table furthermore matching a user identifier with the network address of a user terminal (3) and with the identifier of the corresponding sub-network, said user identifier being shared by the first server (2) and the second server (4), the portion transmitted to the second server comprising the matches between each sub-network identifier, each network address and each user identifier and the method furthermore comprising the following steps:
- receiving, from the second server, a request to change quality of service from a first quality of service to a second quality of service for a set of user terminals comprising at least one user terminal identified by a user identifier;
- updating the data table by matching each network address corresponding to said user identifier in the data table, with the sub-network identifier associated with the second quality of service; and
implementing a network-address-differentiated quality-of-service policy depending on a membership of each network address to a sub-network of the communication network, said membership being determined from the data table.

2. Method according to Claim 1, furthermore comprising:
- on reception from a first user terminal (3) identified to the first server (2) by a first user identifier, of a request to change quality of service from a first quality of service to a second quality of surface, updating the data table by matching each network address corresponding to said first user identifier in the data table, with the identifier of the sub-network associated with the second quality of service; and
- transmitting at least one portion of the updated data table to the second server (4).

3. Method according to Claim 2, wherein said at least one portion of the data table is transmitted at a predetermined frequency to the second server (4), and wherein the portion of the updated data table is transmitted depending on said predetermined frequency.

4. Method according to one of the preceding claims, comprising a prior step of transmitting, to the second server (4), a match between each sub-network identifier and each corresponding quality of service, with a view to delivering a service to a user terminal (3) with a quality of service corresponding to the sub-network matched with the network address of the user terminal in the data table.

5. Method according to one of the preceding claims, wherein each network address comprises an IP address and a port number.

6. Method according to one of the preceding claims, wherein a network-address-differentiated quality-of-service policy is implemented in the communication network (1) and wherein the method furthermore comprises the following steps:
- receiving, from the second server (4), a set of metrics, each metric of the set of metrics being representative of a quality of experience in a sub-network of the communication network;
- updating, depending on the set of received metrics, a network-address-differentiated quality-of-service policy depending on a membership of each network address to a sub-network of the communication network, said membership being determined from the data table.

7. Computer program containing instructions for implementing the method according to any one of the preceding claims, when this program is executed by a processor.

8. System enabling interaction between a service provider and a communication network comprising a first server (4) of said service provider and a second server (2) of the operator of said network, said second server (2) of the operator of said network being suitable for implementing the steps of Claim 1;
said first server of said service provider being intended to be used by a service provider to communicate with the second server (2) of the operator of said network and comprising:
- a unit (42) for transmitting to said second server of said network operator a request, said request requesting information related to said communication network;
- a unit (44) for receiving at least one portion of a data table stored in the network-operator server, said portion comprising matches between identifiers of sub-networks of the communication network and at least one network address of a user terminal, said network address comprising an IP address of the user terminal;
- a unit (41) for storing said portion of the data table; and
the first server (4) of said service provider furthermore comprising a unit (43) for determining a set of metrics, each metric being representative of a quality of experience in a sub-network of the communication network, the transmitting unit (42) furthermore being suitable for transmitting the determined set of metrics to said second server of the operator of said network.
